# EUROPÄISCHE PATENTSCHRIFT

(11) **EP 3 434 539 B1**
(45) Veröffentlichungstag und Bekanntmachung des Hinweises auf die Patenterteilung: **09.09.2020**
(21) Anmeldenummer: 18181857.6
(22) Anmeldetag: 05.07.2018
(51) Int. Cl.: B60S 5/04

(54) **VERFAHREN UND VORRICHTUNG ZUR IDENTIFIKATION EINES REIFENTYPS AN EINEM FAHRZEUG**
METHOD AND DEVICE FOR IDENTIFYING A TYPE OF TYRE ON A VEHICLE
PROCÉDÉ ET DISPOSITIF D'IDENTIFICATION D'UN TYPE DE PNEU DANS UN VÉHICULE

(30) Priorität: 27.07.2017 DE 102017212932
(43) Veröffentlichungstag der Anmeldung: 30.01.2019
(73) Patentinhaber: Robert Bosch GmbH, 70442 Stuttgart (DE)
(72) Erfinder: Greiner, Rinaldo, 72762 Reutlingen (DE); Haendel, Adina, 50127 Bergheim (DE)

(56) Entgegenhaltungen:
- FR-A1- 3 020 597
- GB-A- 2 323 453
- US-A- 4 456 038

## Beschreibung

Die Erfindung betrifft ein Verfahren sowie eine Vorrichtung zur Identifikation eines Reifentyps an einem Zweirad, insbesondere an einem Fahrrad. Weiterhin betrifft die Erfindung die Steuerung einer Pumpe ausgehend von dem erkannten Reifentyp.

### Stand der Technik

Bei Fahrzeugen, wie Zweirädern und besonders bei Fahrrädern oder Cargo-Bikes, können für verschiedene Einsatzzwecke unterschiedliche Reifentypen sinnvoll sein. So kann je nach Untergrund oder Fahrradgattung ein anderer Reifentyp eingesetzt werden. Die dabei typischerweise verwendeten Reifen, z.B. Mountainbike-, Rennrad- oder Trecking-Reifen unterscheiden sich vom verwendeten Material, der Wandstärke sowie dem Luftvolumen. Für den Einsatz dieser Reifen ist daher für jeden Reifentyp ein individueller Reifendruck vorgesehen, der üblicherweise auf dem Reifen vermerkt ist.
Auch wenn die Information über den jeweiligen Reifendruck des Reifens somit für den Zweiradfahrer beim Aufpumpen zugänglich ist, wird oftmals nur kursorisch geprüft, ob der Luftdruck ausreichend ist, z.B. mittels dem Eindrücken des Reifens mit dem Daumen. Da der Druck im Reifen jedoch Auswirkungen sowohl auf die effiziente Kraftübertragung vom Fahrer auf die Straße als auch das Unfallrisiko hat, ist es wichtig, den ordnungsgemäßen Reifendruck im Reifen einzustellen.

Aus der Schrift US 4 456 038 A ist eine Vorrichtung zur Erreichung eines gewünschten Drucklevels in einem Reifen bekannt. Ein Verfahren, welches mit dieser Vorrichtung durchgeführt wird besteht dabei darin, den Druck innerhalb des Reifens auf dem gewünschten Drucklevel zu halten. Hierbei wird ausgehend von einem erfassten Druck sowie deren Größe der Abweichung eine Befüllung des Reifens veranlasst. Nach einer erneuten Erfassung des aktuellen Drucks kann aufgrund des Befüllungsvorgangs erkannt werden, ob der Reifen ein Fahrradreifen darstellt.

Aus den Schriften GB 2 323 453 A und FR 3 020 597 A1 sind weitere Vorrichtungen zur pneumatischen Befüllung eines Reifens bekannt.

Mit der vorliegenden Erfindung soll ein Verfahren und eine Vorrichtung beschrieben werden, mittels der während des Aufpumpvorgangs der Reifentyp erkannt und somit eine Aufpumpempfehlung ableitbar ist. Weiterhin soll mit der Erfindung eine Vorrichtung beschrieben werden, die aufgrund dieser Information den Pumpvorgang steuert.

### Offenbarung der Erfindung

Die Erfindung gemäß der vorliegenden Ansprüche beansprucht ein Verfahren und eine Vorrichtung zur Identifikation eines Reifens an einem Fahrzeug, insbesondere ein Fahrrad, sowie ein Steuerungsverfahren und eine Steuerungsvorrichtung, die in Abhängigkeit vom identifizierten Reifentyp einen Aufpumpvorgang steuert. Diese Steuerungsvorrichtung kann dabei im Rahmen einer Fahrradpumpe, einer Steuerung eines Elektrofahrrads, z.B. im Steuergerät HMI (Human-Machine-Interface), oder als Applikation in einem Mobilfunkgerät angewandt werden.

Zur Realisierung der Erfindung ist vorgesehen, ein erstes Drucksensorsignal zu einem ersten Zeitpunkt während eines Aufpumpvorgangs zu erfassen, welches den Druck innerhalb des Reifens darstellt. Anschließend wird nach einem gegebenenfalls vorgegebenen oder willkürlich gewählten Zeitraum zu einem zweiten Zeitpunkt ein zweites Drucksensorsignal erfasst, welches den veränderten Druck innerhalb des Reifens während des Pumpvorgangs darstellt. Dabei ist vorgesehen, dass der Zeitraum zwischen dem ersten und dem zweiten Zeitpunkt ausreichend groß gewählt werden sollte, um eine eindeutige Aussage hinsichtlich des Reifentyps feststellen zu können. Der Kern der Erfindung liegt dabei darin, dass aus der Druckdifferenz in Bezug zur Zeitdauer zwischen den beiden erfassten Druckgrößen ein charakteristischer Pumpvorgang erkannt werden kann, so dass eine Identifikation des Reifentyps möglich ist.

Durch die automatische Feststellung des Reifentyps während des Pumpvorgangs kann der Nutzer ohne zusätzliche Informationen den Reifen auf seinen optimalen Nutzungsdruck aufpumpen.

In einer Weiterbildung der Erfindung kann vorgesehen sein, dass zusätzlich eine Temperaturgröße erfasst und bei der Ableitung des Reifentyps berücksichtigt wird, die die Umgebungstemperatur oder die Temperatur der Luft innerhalb des Reifens repräsentiert. Hierdurch kann entsprechend der Gasgleichung genauer erkannt werden, wie sich die Druckänderung im Inneren des Reifens durch den Pumpvorgang tatsächlich geändert hat. Hierzu wäre insbesondere vorteilhaft, wenn die Temperaturgröße der Luft im Inneren des Reifens sowohl beim ersten als auch beim zweiten Zeitpunkt erfasst wird.

Aus den erfassten Größen bzw. dem abgeleiteten Reifentyp kann anschließend auf den minimal oder maximal am Reifen einstellbaren Reifendruck geschlossen werden. Ebenso ist denkbar, einen optimalen Nutzungsdruck abzuleiten. Diese Werte können ebenso wie der Reifentyp sowie der aktuell beim Pumpvorgang im Reifen vorliegende Druck an den Fahrer des Zweirads bzw. dem Nutzer der für den Pumpvorgang verwendeten Pumpe weitergegeben werden. Dies kann beispielsweise über eine Anzeige an der Pumpe selber, über ein Anzeigegerät am Zweirad oder über ein Mobilfunkgerät erfolgen.

Zur Steuerung des Pumpvorgangs ist vorgesehen, dass die verwendete Pumpvorrichtung eine steuerbare Aktuatorik, z.B. eine Pumpe und/oder ein steuerbares Ventil aufweisen. So kann in Abhängigkeit des erkannten aktuellen Drucks und des einzustellenden Drucks direkt die Pumpe zur Druckerhöhung bis zum gewünschten Zieldruck angesteuert werden. Alternativ oder zusätzlich kann auch ein steuerbares Ventil vorgesehen sein, welches bei Erreichen des Zieldrucks verhindert, dass ein Überdruck erzeugt wird. So kann gerade bei manuell gesteuerten Pumpen eine Beschädigung des Reifens vermieden werden.

Aus der Ableitung des minimalen oder maximalen am Reifen einstellbaren Reifendrucks sowie optimalen Nutzungsdruck kann die Ansteuerung eine Zieldruck wählen, der erreicht werden soll. Dabei ist darauf hinzuweisen, dass nicht in jedem Fall der maximale Reifendruck für den Aufpumpvorgang gewählt werden sollte, da beispielsweise hohe Umgebungstemperaturen den Innendruck unter Umständen noch ansteigen lassen könnte.

Für die Vorrichtung zur Identifikation des Reifentyps ist vorgesehen, dass an der Pumpvorrichtung, z.B. einer Fahrradpumpe, wenigstens ein erster Sensor vorgesehen ist, der in der Lage ist, ein Drucksensorsignal zu erzeugen, welches den Druck innerhalb des Reifens repräsentiert. Ein derartiger Drucksensor kann beispielsweise im Mantel oder im Ventil angeordnet sein. Optional ist vorgesehen, dass ein zweiter Sensor vorgesehen ist, der eine Temperaturgröße erfasst. Diese Temperaturgröße kann dabei beispielsweise die Umgebungstemperatur oder die Temperatur des Mediums im Reifen darstellen.

Besonders vorteilhaft lässt sich das Verfahren zur Identifikation oder das Steuerungsverfahren für den Pumpvorgang mittels einer Applikation auf einem Mobilfunkgerät oder im Rahmen der Steuerung eines Elektrofahrrads realisieren. Hierzu ist notwendig, dass die Pumpvorrichtung mittels geeigneter Sensoren und Aktuatoren (Pumpe und/oder Ventil) ausgestattet sind, die sich durch externe Steuergeräte steuern lassen.

Weitere Vorteile ergeben sich aus der nachfolgenden Beschreibung von Ausführungsbeispielen bzw. aus den abhängigen Patentansprüchen.

### Kurze Beschreibung der Zeichnungen

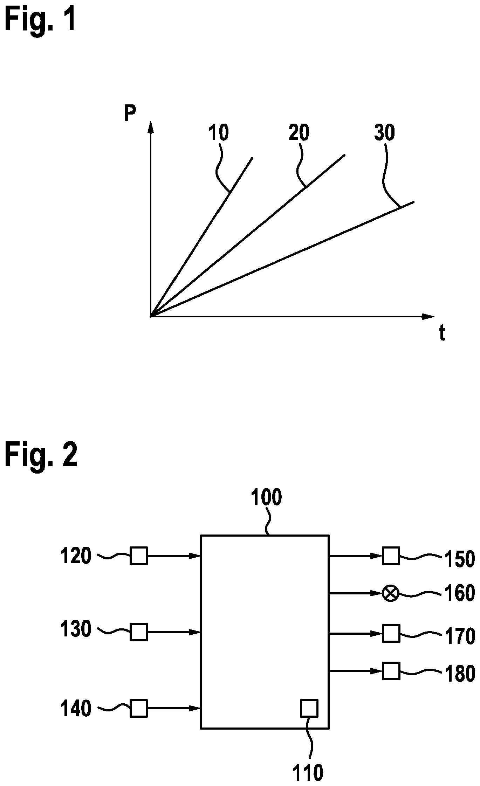

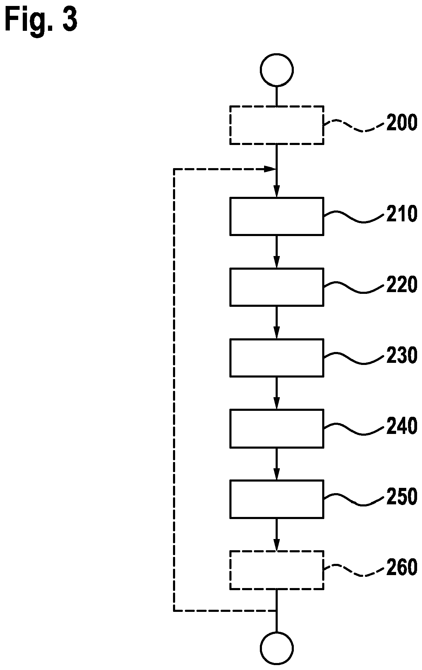

In der Figur 1 sind schematisch verschiedene Druckverläufe beim Aufpumpen eines Reifens dargestellt. Figur 2 zeigt in einem Blockschaltbild eine mögliche erfindungsgemäße Vorrichtung in Form einer Auswerte- bzw. Steuereinheit. Mit der Figur 3 ist anhand eines Flussdiagramms eine mögliche Realisierung des erfindungsgemäßen Verfahrens zur Identifikation des Reifentyps dargestellt.

### Ausführung der Erfindung

Bei der Verwendung unterschiedlicher Reifentypen an einem Fahrzeug, z.B. einem Fahrrad oder einem Cargo-Bike, ist darauf zu achten, dass jeder Reifentyp aufgrund seines Aufbaus, des verwendeten Materials, des Innenvolumens und des zu befahrenden Untergrunds einen anderen Reifenluftdruck benötigt. So kann beispielsweise bei einem Rennradreifen der Reifen auf über 6 bar aufgepumpt werden, wobei bei Trecking-Reifen lediglich ein Reifendruck von 2,5 bis 3,5 bar vorgesehen ist. Um den Fahrer des Fahrzeugs bzw. Fahrrads zu entlasten, soll mit der vorliegenden Erfindung eine Möglichkeit geschaffen werden, das Aufpumpen eines Reifens zu erleichtern.

Das Druckverhalten eines Reifens während des Aufpumpens wird wie bereits ausgeführt, im Wesentlichen durch den Aufbau des Reifens bestimmt. Hierbei spielt neben dem mehr oder weniger flexiblen Material für den Mantel auch das verwendete Reifenvolumen eine Rollen. Im Diagramm der Figur 1 sind beispielhaft die Druckänderungen während des Aufpumpens mit einer gleichwirkenden Druckquelle dargestellt. Die Kurve 10 entspricht dabei im Wesentlichen einem Rennradreifen, die Kurve 20 einem Trecking-Reifen und die Kurve 30 einem Reifen für ein Mountainbike. Wie zu erkennen ist, ist bei einem Reifen mit einem starrerem Material und ausgeprägtem Profil, z.B. einem Reifen für ein Mountainbike, ein geringerer Druckanstieg zu beobachten. Dies bedeutet im Normalfall, dass ein derartiger Reifen länger zum Aufpumpen benötigt.

In der Figur 2 ist schematisch eine erfindungsgemäße Vorrichtung 100 zur Identifikation des Reifentyps an einem Zweirad dargestellt. Diese Vorrichtung kann aus Auswerte- und/oder Steuereinheit eigenständig oder in Verbindung mit anderen Vorrichtungen eingesetzt werden. So ist denkbar, dass diese Vorrichtung 100 Teil einer Fahrradpumpe oder eines Steuergeräts eines Elektrofahrrads ist, z.B. ein HMI (Human-Machine-Interface), welches am Lenker befestigt werden kann und dem Fahrer Informationen über den Betrieb des Fahrrads zur Verfügung stellen kann. Darüber hinaus ist auch möglich, dass ein Mobilfunkgerät die Funktion dieser Vorrichtung übernimmt.

Die Vorrichtung 100 weist einen Speicher 110 auf, in dem die Druckverläufe für verschiedene Reifentypen hinterlegt sind. Zusätzlich oder optional können in diesem Speicher auf weitere Informationen über die Reifentypen abgelegt werden. Hierbei kann es sich um die Informationen über den maximalen oder minimalen zugelassenen Reifendruck als auch um den für den Normalbetrieb vorgesehen Reifendruck handeln. Der Speicherinhalt des Speichers 110 kann mittels einer Schnittstelle aktualisiert und ausgelesen werden, beispielsweise über eine Anbindung ans Internet oder an ein Smartphone. Die Vorrichtung 100 erfasst für die Identifikation des Reifentyps zunächst die Sensorgrößen eines Drucksensors 120, wobei die Erfassungszeitpunkte oder alternativ der Zeitraum zwischen der Erfassung zweier Sensorgrößen bestimmt wird. Aus den so erfassten Drucksensorgrößen, die den Luftdruck in dem aufzupumpenden Reifen repräsentieren, sowie dem bestimmten Zeitraum wird eine Druckänderung Δp/Δt bestimmt, aus der mit Hilfe der im Speicher 110 abgelegten Daten der Reifentyp ermittelt werden kann. Dieser Reifentyp kann dann an eine Anzeige 160 oder ein mit der Vorrichtung 100 verbundenes Steuereinheit oder Mobilfunkgerät 170 weitergeleitet werden. Optional kann vorgesehen sein, dass die Vorrichtung 100 auch selbst als Steuereinheit fungiert und in Abhängigkeit des erkannten Reifentyps und des zweiten bzw. zuletzt erfassten Drucks im Reifen einen Aktuator oder eine Pumpe 150 an einer Pumpeneinheit zur Druckerhöhung im Reifen ansteuert. Hierzu können in Abhängigkeit der abgespeicherten Werte auch Schwellenwerte überprüft werden, um eine rechtzeitige Abschaltung der Pumpe bzw. der Pumpeneinheit vor einer Beschädigung des Reifens zu ermöglich. Optional oder zusätzlich kann an der Pumpeinheit auch ein Ventil 180 vorgesehen sein, welches von der Vorrichtung angesteuert wird, falls ein vorgegebener Maximaldruck oder ein Nutzungsdruck überschritten wird.

In einer weiteren Ausbildung der Erfindung ist vorgesehen, zusätzlich eine Temperaturgröße mittels eines Temperatursensors 130 zu erfassen. Dieser Temperatursensor 130 kann eigenständig oder mit dem Drucksensor 120 kombiniert sein. Als Temperaturgröße bietet sich die Temperatur der Umgebung oder die Lufttemperatur im Inneren des Reifens an. Durch diese Größe kann in Verbindung mit der Gasgleichung genauer die Druckänderung im Reifen bestimmt werden. Die Bestimmung kann noch genauer erfolgen, falls sowohl zur Erfassung der ersten als auch zur zweiten Drucksensorgröße jeweils eine Temperaturgröße erfasst wird, die dann bei der Ableitung des Reifentyps einfließen.

Im Flussdiagramm der Figur 3 ist eine mögliche Ausgestaltung eines Verfahrens zur Identifikation des Reifentyps dargestellt, wie es auch in der Vorrichtung 100 ablaufen kann. Der Start des Verfahrens erfolgt entweder auf eine manuelle Anforderung des Fahrers bzw. Nutzers einer Pumpeneinheit während eines Aufpumpvorgangs oder aufgrund einer Erkennung eine Aufpumpvorgangs im optionalen Schritt 200. Im Schritt 210 wird daraufhin ein erster Druck p1 zu einem ersten Zeitpunkt t1 im Inneren des Reifens erfasst. Anschließend wird im Schritt 220 ein zweiter Druck p1 zu einem zweiten Zweitpunkt t2 erfasst. Dabei ist darauf zu achten, dass die Zeitpunkte t1 und t2 ausreichend weit auseinander liegen, um eine eindeutige Ableitung des Reifentyps zu ermöglichen. Denkbar ist auch, dass gerade bei manuellen Pumpeneinheiten der Druck bei oder nach zwei aufeinander folgenden Schüben der Luftpumpe erfasst werden. Im nächsten Schritt 230 wird die Druckänderung gemäß Δp/Δt aus der Differenz der erfassten Drücke Δp=p2-p1 und der Zeitdifferenz Δt=t2-t1 ermittelt. Im nachfolgenden Schritt 240 kann aus dieser Druckänderung in Verbindung mit den abgespeicherten Daten auf einen Reifentyp geschlossen werden (siehe beispielhaft das Diagramm in der Figur 1). In diesem Schritt können zusätzlich auch der maximale Reifendruck pmax, der optimale Nutzungsdruck popt sowie der minimale Reifendruck pmin abgeleitet bzw. bestimmt werden. Im nächsten Schritt 250 wird der Reifentyp dem Fahrer oder Nutzer der Pumpeinheit angezeigt oder einer Steuer- oder Auswerteinheit übermittelt. Hier können ebenfalls die im letzten Schritt bestimmten Werte angezeigt oder übermittelt werden.

Optional kann in einem weiteren Schritt 260 die Information über den Reifentyp sowie der maximale Reifendruck pmax, der optimale Nutzungsdruck popt und/oder der minimale Reifendruck pmin dazu verwendet werden, die Pumpeneinheit direkt anzusteuern, um den gewünschten Zieldruck, z.B. den optimalen Nutzungsdruck einzustellen.

In einer Erweiterung des Verfahrens kann vorgesehen sein, dass im Schritt 210 sowie 220 jeweils eine Temperatur T1 und T2 erfasst wird, die die Temperatur der Umgebung oder der Luft im Inneren des Reifens repräsentiert. Mit der Gasgleichung kann so in Schritt 230 genauer die Druckänderung während des Aufpumpvorgangs bestimmt werden, so dass eine genauere Reifentypbestimmung ermöglicht wird.

## Patentansprüche

1. Verfahren zur Identifikation eines Reifentyps eines Fahrzeugs während eines Aufpumpvorgangs des Reifens, insbesondere eines Fahrrads, wobei zur Identifikation des Reifens
• während des Aufpumpvorgangs des Reifens ein erstes Drucksensorsignal (p1) im Reifen erfasst wird, welches den Druck im Reifen zu einem ersten Zeitpunkt (t1) repräsentiert, und
• während des Aufpumpvorgangs des Reifens ein zweites Drucksensorsignal (p2) im Reifen erfasst wird, welches den Druck im Reifen zu einem nach dem ersten Zeitpunkt (t1) liegenden zweiten Zeitpunkt (t2) repräsentiert, und
• ein Reifentypsignal in Abhängigkeit der zeitlichen Druckänderung (Δp/Δt) erzeugt wird,
**dadurch gekennzeichnet, dass**
in Abhängigkeit vom Reifentypsignal ein maximaler Reifendruck (pmax), ein optimaler Nutzungsdruck (popt) und/oder ein minimaler Reifendruck (pmin) festgelegt wird.

2. Verfahren nach Anspruch 1, **dadurch gekennzeichnet, dass**
• während des ersten und/oder zweiten Zeitpunkts (t1, t2) eine Temperaturgröße (T) erfasst wird, welche insbesondere eine Umgebungstemperatur oder eine Temperatur der Luft innerhalb des Reifens repräsentiert, und
• das Reifentypsignal zusätzlich in Abhängigkeit der erfassten Temperaturgröße (T) erzeugt wird.

3. Steuerungsverfahren für einen Pumpvorgang eines Reifens eines Fahrzeugs, insbesondere eines Fahrrads, wobei zur Identifikation des Reifens ein Verfahren nach einem der Ansprüche 1 oder 2 durchgeführt wird, wobei zur Steuerung des Pumpvorgangs eine Pumpe und/oder ein Ventil einer Pumpvorrichtung in Abhängigkeit von dem erfassten Reifentypsignal und dem zweiten Druck (p2) angesteuert wird, **dadurch gekennzeichnet, dass** der Pumpvorgang bei einem Überschreiten des maximalen Reifendrucks (pmax), des optimalen Nutzungsdrucks (popt) oder des minimalen Reifendrucks (pmin) beendet wird.

4. Vorrichtung (100) zur Identifikation eines Reifentyps eines Fahrzeugs während eines Aufpumpvorgangs des Reifens, insbesondere eines Fahrrads, wobei die Vorrichtung zur Identifikation ein Verfahren nach einem der Ansprüche 1 oder 2 durchführt, wobei die Vorrichtung (100) zur Identifikation des Reifens
• mittels eines ersten Sensors (120) während des Aufpumpvorgangs des Reifens ein erstes Drucksensorsignal (p1) im Reifen erfasst, welches den Druck im Reifen zu einem ersten Zeitpunkt (t1) repräsentiert, und
• mittels des ersten Sensors (120) während des Aufpumpvorgangs des Reifens ein zweites Drucksensorsignal (p2) im Reifen erfasst, welches den Druck im Reifen zu einem nach dem ersten Zeitpunkt (t1) liegenden zweiten Zeitpunkt (t2) repräsentiert, und
• ein Reifentypsignal in Abhängigkeit der zeitlichen Druckänderung (Δp/Δt) erzeugt,
**dadurch gekennzeichnet, dass**
in Abhängigkeit vom Reifentypsignal ein maximaler Reifendruck (pmax), ein optimaler Nutzungsdruck (popt) und/oder ein minimaler Reifendruck (pmin) ausgegeben wird.

5. Vorrichtung (100) nach Anspruch 4, **dadurch gekennzeichnet, dass** die Vorrichtung (100)
• mittels eines zweiten Sensors (130) während des ersten und/oder zweiten Zeitpunkts (t1, t2) eine Temperaturgröße (T) erfasst wird, welche insbesondere eine Umgebungstemperatur oder eine Temperatur der Luft innerhalb des Reifens repräsentiert, und
• das Reifentypsignal zusätzlich in Abhängigkeit der erfassten Temperaturgröße (T) erzeugt.

6. Vorrichtung (100) nach einem der Ansprüche 4 oder 5, **dadurch gekennzeichnet, dass** die Vorrichtung eine Pumpe (150) und/oder ein Ventil (180) zur Steuerung des Pumpvorgangs in Abhängigkeit von dem erfassten Reifentypsignal und dem zweiten Druck (p2) ansteuert.

7. Vorrichtung (100) nach Anspruch 6, **dadurch gekennzeichnet, dass** der Pumpvorgang bei einem Überschreiten des maximalen Reifendrucks (pmax), des optimalen Nutzungsdrucks (popt) oder des minimalen Reifendrucks (pmin) beendet wird.

## Claims

1. Method for the identification of a tyre type of a vehicle during an inflation operation of the tyre, in particular of a bicycle, wherein, for the identification of the tyre,
• during the inflation operation of the tyre, a first pressure sensor signal (p1) is detected in the tyre, which first pressure sensor signal (p1) represents the pressure in the tyre at a first time (t1), and,
• during the inflation operation of the tyre, a second pressure sensor signal (p2) is detected in the tyre, which second pressure sensor signal (p2) represents the pressure in the tyre at a second time (t2) which lies after the first time (t1), and
• a tyre type signal is generated in a manner which is dependent on the temporal pressure change (Δp/Δt),
**characterized in that**
a maximum tyre pressure (pmax), an optimum utilization pressure (popt) and/or a minimum tyre pressure (pmin) are/is fixed in a manner which is dependent on the tyre type signal.

2. Method according to Claim 1, **characterized in that**,
• during the first and/or second time (t1, t2), a temperature variable (T) is detected which represents, in particular, an ambient temperature or a temperature of the air within the tyre, and
• the tyre type signal is generated in addition in a manner which is dependent on the detected temperature variable (T).

3. Control method for pumping operation of a tyre of a vehicle, in particular of a bicycle, wherein, for the identification of the tyre, a method according to either of Claims 1 and 2 is carried out, wherein, in order to control the pumping operation, a pump and/or a valve of a pumping apparatus are/is actuated in a manner which is dependent on the detected tyre type signal and the second pressure (p2), **characterized in that** the pumping operation is ended in the case of the maximum tyre pressure (pmax), the optimum utilization pressure (popt) or the minimum tyre pressure (pmin) being exceeded.

4. Apparatus (100) for the identification of the tyre type of a vehicle during an inflation operation of the tyre, in particular of a bicycle, wherein, for the identification, the apparatus carries out the method according to either of Claims 1 and 2, wherein, for the identification of the tyre, the apparatus (100)
• detects a first pressure signal (p1) in the tyre by means of a first sensor (120) during the inflation operation of the tyre, which first pressure sensor signal (p1) represents the pressure in the tyre at a first time (t1), and
• detects a second pressure sensor signal (p2) in the tyre by means of the first sensor (120) during the inflation operation of the tyre, which second pressure sensor signal (p2) represents the pressure in the tyre at a second time (t2) which lies after the first time (t1), and
• generates a tyre type signal in a manner which is dependent on the temporal pressure change (Δp/Δt),
**characterized in that**
a maximum tyre pressure (pmax), an optimum utilization pressure (popt) and/or a minimum tyre pressure (pmin) are/is output in a manner which is dependent on the tyre type signal.

5. Apparatus (100) according to Claim 4, **characterized in that** the apparatus (100)
• a temperature variable (T) is detected by means of a second sensor (130) during the first and/or second time (t1, t2), which temperature variable (T) represents, in particular, an ambient temperature or a temperature of the air within the tyre, and
• generates the tyre type signal in addition in a manner which is dependent on the detected temperature variable (T).

6. Apparatus (100) according to either of Claims 4 and 5, **characterized in that** the apparatus actuates a pump (150) and/or a valve (180) in order to control the pumping operation in a manner which is dependent on the detected tyre type signal and the second pressure (p2).

7. Apparatus (100) according to Claim 6, **characterized in that** the pumping operation is ended in the case of the maximum tyre pressure (pmax), the optimum utilization pressure (popt) or the minimum tyre pressure (pmin) being exceeded.

## Revendications

1. Procédé d'identification d'un type de pneu d'un véhicule pendant une opération de gonflage du pneu, en particulier d'une bicyclette, dans lequel, pour l'identification du pneu
• pendant l'opération de gonflage du pneu, un premier signal de capteur de pression (p1) est détecté dans le pneu qui représente la pression dans le pneu à un premier instant (t1), et
• pendant l'opération de gonflage du pneu, un deuxième signal de capteur de pression (p2) est détecté dans le pneu qui représente la pression dans le pneu à un deuxième instant (t2) situé après le premier instant (t1), et
• un signal de type de pneu est produit en fonction de la variation de pression dans le temps (Δp/Δt),
**caractérisé en ce qu'**en fonction du signal de type de pneu, une pression de pneu maximale (pmax), une pression de service optimale (popt) et/ou une pression de pneu minimale (pmin) sont établies.

2. Procédé selon la revendication 1, **caractérisé en ce que**
• pendant le premier et/ou le deuxième instant (t1, t2), une grandeur de température (T) est détectée qui représente en particulier une température ambiante ou une température de l'air à l'intérieur du pneu, et
• le signal de type de pneu est produit de plus en fonction de la grandeur de température (T) détectée.

3. Procédé de commande pour une opération de gonflage d'un pneu d'un véhicule, en particulier d'une bicyclette, dans lequel, pour l'identification du pneu, un procédé selon l'une quelconque des revendications 1 ou 2 est effectué, dans lequel, pour la commande de l'opération de gonflage, une pompe et/ou une valve d'un dispositif de gonflage est pilotée en fonction du signal de type de pneu détecté et de la deuxième pression (p2),
**caractérisé en ce que** l'opération de gonflage est terminée en cas de dépassement de la pression de pneu maximale (pmax), de la pression de service optimale (popt) ou de la pression de pneu minimale (pmin).

4. Dispositif (100) d'identification d'un type de pneu d'un véhicule pendant une opération de gonflage du pneu, en particulier d'une bicyclette, le dispositif d'identification effectuant un procédé selon l'une quelconque des revendications 1 ou 2, dans lequel le dispositif (100) d'identification du pneu
• détecte au moyen d'un premier capteur (120), pendant l'opération de gonflage du pneu, un premier signal de capteur de pression (p1) dans le pneu qui représente la pression dans le pneu à un premier instant (t1), et
• détecte au moyen du premier capteur (120), pendant l'opération de gonflage du pneu, un deuxième signal de capteur de pression (p2) dans le pneu qui représente la pression dans le pneu à un deuxième instant (t2) situé après le premier instant (t1), et
• produit un signal de type de pneu en fonction de la variation de pression dans le temps (Δp/Δt), **caractérisé en ce qu'**en fonction du signal de type de pneu, une pression de pneu maximale (pmax), une pression de service optimale (popt) et/ou une pression de pneu minimale (pmin) sont sorties.

5. Dispositif (100) selon la revendication 4, **caractérisé en ce que** le dispositif (100)
• au moyen d'un deuxième capteur (130), pendant le premier et/ou le deuxième instant (t1, t2), une grandeur de température (T) est détectée qui représente en particulier une température ambiante ou une température de l'air à l'intérieur du pneu, et
• produit le signal de type de pneu de plus en fonction de la grandeur de température (T) détectée.

6. Dispositif (100) selon l'une quelconque des revendications 4 ou 5, **caractérisé en ce que** le dispositif pilote une pompe (150) et/ou une valve (180) pour commander l'opération de gonflage en fonction du signal de type de pneu détecté et de la deuxième pression (p2).

7. Dispositif (100) selon la revendication 6, **caractérisé en ce que** l'opération de gonflage est terminée en cas de dépassement de la pression de pneu maximale (pmax), de la pression de service optimale (popt) ou de la pression de pneu minimale (pmin).
